# EUROPEAN PATENT APPLICATION

(11) **EP 1 462 503 A1**
(43) Date of publication of application: **29.09.2004**
(21) Application number: 02778019.6
(22) Date of filing: 31.10.2002
(51) Int. Cl.: C09K 21/06, C08J 5/00, C08K 5/41, C08L 67/04, C08L 101/00

(54) **FLAME RETARDANT COMPOSITION, PROCESS FOR PRODUCING THE SAME, FLAME-RETARDANT RESIN COMPOSITION, AND MOLDED OBJECT THEREOF**

(30) Priority: 06.12.2001 JP 2001373456
(71) Applicant: DAICEL CHEMICAL INDUSTRIES, Ltd., Sakai-shi, Osaka 590-0905 (JP)
(72) Inventor: IYOSHI, Shuso, Ohtake-shi, Hiroshima 739-0651 (JP); OKUMURA, Kouichi, Matsudo-shi, Chiba 270-0021 (JP); ENDO, Toshio, Hiroshima-shi, Hiroshima 739-0651 (JP)
(74) Representative: Grünecker, Kinkeldey, Stockmair & Schwanhäusser Anwaltssozietät
(86) International application number: PCT/JP2002/011380
(87) International publication number: WO 2003/048270

(57) **Abstract**

A molded article is produced from a flame retardant resin composition obtained by compounding a thermoplastic resin or thermosetting resin with a flame retardant composition comprising as essential ingredients a fluorine compound (A) represented by the following formula (1):

R¹-SO₂-R² or R¹-SO₃⁻M⁺ (1)

(wherein R¹ represents a C₁-C₁₂ perfluoroalkyl group, a C₂-C₈ perfluoroalkenyl group, a C₆-C₁₂ perfluoroaryl group which may be substituted, a C₃-C₁₂ perfluoroalicyclic hydrocarbon group, or a C₇-C₁₂ perfluoroaralkyl group; R² represents a halogen atom, an N-alkylamino group, or an N-alkyl-N-hydroxyalkylamino group; and M represents an alkali metal) and a polyester resin (B). The molded article has flame retardancy despite addition of the fluorine compound (A) in a very small amount. Excellent dispersion of the fluorine compound (A) is attained, and bleeding of the compound (A) is prevented.

## Description

### Technical Field

The present invention relates to a novel flame retardant composition, to a process for producing the composition, to a flame retardant resin composition, and to a molded article of the resin composition. More particularly, the present invention relates to a flame retardant composition containing a fluorine compound which exerts excellent flame retardant effect, despite being present in a considerably small content, and a polyester resin which has excellent compatibility with a variety of resins and solubility in solvent; to a process for producing the composition; and to a flame retardant resin composition and a molded article produced from the resin composition in which bleeding of the flame retardant is suppressed.

### Background Art

Thermoplastic resins (e.g., polypropylene resin, polystyrene resin, ABS resin, polycarbonate resin, and polyester resin) and thermosetting resins (e.g., epoxy resin, polyurethane resin, and phenolic resin) have excellent characteristics such as the ability to be produced at comparatively low cost, and easy moldability. Therefore, these resins find a wide range of uses such as electronic materials and automobile parts.

These resins are generally highly flammable. Thus, such a thermoplastic resin requires, for use thereof, flame-retarding treatment; i.e., adding a flame retardant and a flame retardant auxiliary to the resin. In recent years, higher performance (flame retardancy, mechanical characteristics, heat resistance, electrical insulating property, etc.) of thermoplastic resins has been required as the type of use of the resins diversifies and the scale of the resin products increases.

As disclosed in Japanese Patent Application Laid-Open (kokai) No. 11-343382, flame retardancy is generally imparted to thermoplastic resin through a method including adding a halogen-containing flame retardant to a resin composition upon preparation thereof. However, such a halogen-containing flame retardant, which effectively imparts flame retardancy to resin, generates hydrogen halide as a result of thermal decomposition thereof during molding of the resin at high temperature, and the thus-generated hydrogen halide may corrode metallic portions of a mold, a molding machine, an apparatus relating to molding, or electronic/electric parts.

As halogen-free flame retardants, inorganic metallic compounds such as magnesium hydroxide, aluminum hydroxide, calcium hydroxide, and basic magnesium carbonate are employed. Among them, magnesium hydroxide is widely used, by virtue of its high dehydration-decomposition temperature and excellent smoke suppression effect during flaming. However, in order to attain sufficient flame retardant effect, magnesium hydroxide must be added in a large amount, which results in a considerable drop in intrinsic physical properties of resin, particularly mechanical characteristics.

As halogen-free flame retardants other than inorganic metallic compounds, organic phosphorus compounds are also generally employed. Examples of generally known such organic phosphorus compounds include low-molecule phosphate esters such as trimethyl phosphate and triphenyl phosphate. For example, Japanese Patent Application Laid-Open (kokai) No. 61-291644 discloses that an ABS resin can be imparted with flame retardancy by adding a resol-type phenolic resin and red phosphorus to the ABS resin. Japanese Patent Application Laid-Open (*kokai*) Nos. 6-248160 and 7-48491 disclose that techniques for imparting flame retardancy to an ABS resin in which a phenolic resin and an organic phosphorus compound are added to the ABS resin without deteriorating impact resistance of the resin. However, although the resins compositions disclosed in the above publications have excellent flame retardancy and mechanical characteristics, heat resistance of the compositions is unsatisfactory. Particularly, the compositions are difficult to use as members which require high heat resistance (i.e., parts employed in portions which are locally heated; e.g., automobile engine-related parts and heat-transfer rollers in copying machines).

The organic phosphorus compounds have another drawback. Namely, since the phosphorus compounds impart a resin with plasticity as well as flame retardancy, heat deformation temperature and softening temperature of the resin drop considerably. Flame retardant ABS resin compositions are known to be deteriorated in terms of electric characteristics and flame retardancy due to absorption of water to the resin compositions, when the resin compositions are used under severe (high temperature and moisture) conditions as a variety of electric/electronic parts (e.g., television set parts and personal computer parts) or automobile parts.

The most critical drawback of these halogen-containing or halogen-free flame retardants is that the flame retardants bleed from the resin due to their poor dispersibility in the resin during storage of the flame retardant resin composition at high temperature for a long time, thereby impairing appearance of resin products. In addition, when a flame retardant bleeds out to the surface of the resin article, the flame retardant is adsorbed on the human body during handling of the article, which is problematic in view of safety. In order to solve these problems, a variety of countermeasures have been proposed; for example, a method in which a specific compound is added to polyolefin resin (Japanese Patent Application Laid-Open (*kokai*) No. 6-299007); and a method in which an inorganic filler is added to crystalline propylene polymer to which a halogen-containing flame retardant and a flame retardant aid have been added (Japanese Patent Application Laid-Open (kokai) No. 7-53796). However, currently, these two methods do not provide satisfactory effect on suppressing bleeding of a flame retardant. In order to solve the problem, Japanese Patent Application Laid-Open (*kokai*) No. 2000-154282 discloses a method in which a halogen-containing flame retardant and a polyester resin are incorporated into a polyolefin resin, thereby suppressing bleeding of the flame retardant. However, the above effect can be attained satisfactorily only when the halogen-containing flame retardant is added in a large amount to the polyester resin. Thus, the intrinsic characteristics of the resin to which the flame retardant is added are impaired, which is problematic.

Meanwhile, the fluorine compound (A) used in the present invention can impart very effective flame retardancy to a resin through addition of the compound (A) in a trivial to very small amount of some ppm to some %. However, similar to the case of other flame retardants, the compound (A) also has the problem of poor dispersibility in resin. In order to impart excellent flame retardancy to a resin, a uniform dispersion state of a flame retardant is essential, and therefore, in some cases the resin must be kneaded several times at high temperature. Such kneading may cause decomposition of resin and may rather deteriorate flame retardant properties of the resin concomitant with drip generation.

### Disclosure of the Invention

An object of the present invention for solving the aforementioned problems is to provide an excellent flame retardant composition which exhibits good dispersibility in a variety of resins, prevents bleeding of a flame retardant, and can provide flame retardant effect through addition of the composition in a small amount, thereby not deteriorating physical properties of the resins. Another object of the invention is to provide a process for producing the flame retardant composition.

Still another object of the invention is to provide a flame retardant resin composition to which the flame retardant composition has been added and which has a halogen content in the resin as small as possible, thereby reducing the impact of the composition upon the environment during discharge and firing of the resin. Yet another object of the invention is to provide a molded article having flame retardancy formed by molding the flame retardant resin composition.

The present inventors have carried out extensive studies in order to solve the aforementioned problems, and have found that, through co-presence of a polyester resin, a specific fluorine compound can be readily added to a variety of resins with high dispersibility, thereby preventing bleeding of a flame retardant, and can impart flame retardancy to resin through addition of the compound in a very small amount.

The present inventors have also found that a flame retardant composition can be produced more easily by polymerizing a lactone monomer in the presence of a fluorine compound (A).

Furthermore, the present inventors have also found that a flame retardant composition can be produced easily by preliminary mixing the fluorine compound and the polyester resin, and that a flame retardant resin composition which exhibits flame retardancy without impairing the intrinsic properties of the resin can be produced by blending a small amount of the flame retardant composition with a thermoplastic resin or a thermosetting resin, and a molded article can be produced by molding the resin composition.

Accordingly, the present invention provides a flame retardant composition, characterized in that the composition comprises, as essential ingredients, a fluorine compound (A) represented by the following formula (1):

R¹-SO₂-R² or R¹-SO₃⁻M⁺ (1)

(wherein R¹ represents a C₁-C₁₂ perfluoroalkyl group, a C₂-C₈ perfluoroalkenyl group, a C₆-C₁₂ perfluoroaryl group which may be substituted, a C₃-C₁₂ perfluoroalicyclic hydrocarbon group, or a C₇-C₁₂ perfluoroaralkyl group; R² represents a halogen atom, an N-alkylamino group, or an N-alkyl-N-hydroxyalkylamino group; and M represents an alkali metal) and a polyester resin (B).

The present invention also provides a process for producing a flame retardant composition, characterized in that the process comprises polymerizing a lactone monomer in the presence of a fluorine compound (A) represented by the following formula (1):

R¹-SO₂-R² or R¹-SO₃⁻M⁺ (1)

(wherein R¹ represents a C₂-C₁₂ perfluoroalkyl group, a C₂-C₈ perfluoroalkenyl group, a C₆-C₁₂ perfluoroaryl group which may be substituted, a C₃-C₁₂ perfluoroalicyclic hydrocarbon group, or a C₇-C₁₂ perfluoroaralkyl group; R² represents a halogen atom, an N-alkylamino group, or an N-alkyl-N-hydroxyalkylamino group; and M represents an alkali metal). The invention also provides a flame retardant resin composition formed of the aforementioned flame retardant composition and a thermoplastic or thermosetting resin, as well as a molded article formed by molding the aforementioned flame retardant resin composition.

### Best Mode for Carrying Out the Invention

The present invention will next be described in detail.

The flame retardant composition of the present invention contains as essential ingredients a fluorine compound represented by the aforementioned formula (1) (A) and a polyester resin (B).

Firstly, the fluorine compound serving as the ingredient (A) used in the present invention will be described.

Among a variety of species of R¹ in formula (1), the C₁-C₁₂ perfluoroalkyl group may be a linear chain or branched chain alkyl group. Specific examples of corresponding C₁-C₁₂ alkyl groups include linear chain alkyl groups such as methyl, ethyl, n-propyl, n-butyl, n-pentyl, n-hexyl, n-heptyl, and n-octyl; and branched chain alkyl groups such as isopropyl, isobutyl, sec-butyl, tert-butyl, isopentyl, tert-pentyl, neopentyl, isohexyl, methylhexyl, methylheptyl, dimethylhexyl, and 2-ethylhexyl. Of these, lower alkyl groups such as methyl, ethyl, n-propyl, n-butyl, isopropyl, isobutyl, sec-butyl, and tert-butyl are preferred, with methyl and ethyl being particularly preferred.

Examples of the C₂-C₈ alkenyl group of such C₂-C₈ perfluoroalkenyl groups include vinyl, allyl, isopropenyl, butenyl, pentenyl, hexenyl, heptenyl, and octenyl. Of these, allyl is particularly preferred.

Examples of the optionally substituted C₆-C₁₂ aryl groups corresponding to C₆-C₁₂ perfluoroaryl groups which may be substituted include phenyl, (o-, m-, p-)cresyl, (o-, m-, p-)tolyl, (2,3-, 2,4-, 2,5-, 2,6-, 3,4-, 3,5-)xylyl, mesityl, trimethylphenyl, ethylphenyl, propylphenyl, butylphenyl, nitrophenyl, methoxyphenyl, and naphthyl. Of these, phenyl, cresyl, and xylyl are particularly preferred.

Examples of the C₃-C₁₂ alicyclic hydrocarbon group of such C₃-C₁₂ perfluoroalicyclic hydrocarbon groups include saturated alicyclic hydrocarbon groups and unsaturated alicyclic hydrocarbon groups, with saturated alicyclic hydrocarbon groups being preferred. Examples of preferred saturated alicyclic hydrocarbon groups include cyclopentyl, cyclohexyl, and cycloheptyl. Of these, cyclohexyl is particularly preferred.

Examples of preferred C₇-C₁₂ aralkyl groups of such C₇-C₁₂ perfluoroaralkyl groups include benzyl and phenethyl. Of these, benzyl is particularly preferred.

Among a variety of species of R² in formula (1), the halogen atom is fluorine, chlorine, or bromine. The alkyl group constituting the N-alklyamino group or the N-alkyl-N-hydroxyalkylamino group is a C₁-C₄ alkyl group, preferably methyl, ethyl, or propyl.

M in formula (1) represents an alkali metal including lithium, sodium, and potassium.

Examples of preferred fluorine compounds represented by formula (1) include potassium perfluorobutylsulfonate, potassium perfluorooctylsulfonate, lithium perfluorooctylsulfonate, potassium perfluoro-4-ethylcyclohexylsulfonate, perfluorobutanesulfonyl fluoride, perfluorohexanesulfonyl fluoride, perfluorooctanesulfonyl fluoride, N-ethylperfluorooctanesulfonamide, and N-ethyl-N-hydroxyethylperfluorooctanesulfonamide. Of these, potassium perfulorobutylsulfonate is preferably used.

These compounds may be used singly or in combination.

Example of the polyester resin serving as the ingredient (B) used in the present invention include lactone polymers obtained through ring-opening polymerization of a C₄-C₁₁ lactone; polyester resins obtained through condensation between an aliphatic dicarboxylic acid (e.g., oxalic acid, succinic acid, glutaric acid, adipic acid, pimelic acid, suberic acid, azelaic acid, sebacic acid, or dodecanedioic acid) or an aromatic dicarboxylic acid (e.g., terephthalic acid, isophthalic acid, or o-phthalic acid) and an aliphatic diol (e.g., ethylene glycol, 1,3-propanediol, 1,4-butanediol, neopentyl glycol, 1,5-pentanediol, 3-methyl-1,5-pentanediol, 1,6-hexanediol, or 1,9-nonanediol), an alicyclic diol (e.g., cyclohexane-1,4-dimethanol), or an ether diol (e.g., tetramethylene glycol); lactone-modified polyester resins obtained through copolymerization of a polyester resin and a lactone; resins of an aliphatic or aromatic hydroxycarboxylic acid polymer; hydroxycarboxylic acid (e.g., 3-hydroxybutylate and 3-hydroxyvalerate) copolymer resins; and mixtures thereof.

These aliphatic dicarboxylic acids and aromatic dicarboxylic acids may be used in combination of two or more species. Also, these diols may be used in combination of two or more species.

The aliphatic or aromatic polyester resin serving as the aforementioned ingredient (B) can be produced through a known method. For example, the polyester resin can be produced through a method including transesterification between a lower alcohol ester of a dicarboxylic acid and an excessive amount of a glycol in the presence of a catalyst, followed by polycondensation of the formed reaction product. Alternatively, the polyester resin can also be produced through a method including esterification of a dicarboxylic acid with an excessive amount of a glycol in the presence of a catalyst, followed by polycondensation of the formed reaction produced.

The reaction temperature is 180 to 290°C, preferably 200 to 280°C.

Examples of polycondensation catalysts include titanium compounds, antimony compounds, tin compounds, calcium compounds, and manganese compounds. Any of these catalysts is used in an amount of 0.1 to 1,000 ppm based on the weight of the starting material, preferably 0.5 to 500 ppm.

Among the polyester resins, lactone polymers are preferred. Examples of the monomers for producing lactone polymers include ε-caprolactone, trimethyl-ε-caprolactone, monomethyl-ε-caprolactone, γ-butyrolactone, and δ-valerolactone. These monomers may be used singly or in combination of two or more species, and may be co-polymerized. Among the lactone polymers, poly(ε-caprolactone) is preferably used from the viewpoints of compatibility with resin and dispersibility of the fluorine compound (A) therein.

According to the present invention, when a lactone polymer is employed as the polyester (B), the flame retardant composition can readily be produced through polymerization of a lactone monomer in the presence of the fluorine compound (A).

The method for polymerizing a lactone monomer includes mixing the lactone monomer and a polymerization initiator and stirring the mixture for several hours preferably in the presence of a catalyst at 120°C to 230°C, preferably at 140°C to 220°C, in a continuous or batch reaction manner. The polymerization initiator used herein is a compound having one or more active hydrogen atoms; i.e., water and hydroxyl groups.

Examples of compounds having hydroxyl groups include alkylene glycols such as ethylene glycol, propylene glycol, 1,4-butanediol, 2,3-butylene glycol, pentamethylene glycol, hexamethylene glycol, glycerin, trimethylolpropane, ditrimethylolpropane, pentaerythritol, and dipentaerythritol.

As the polymerization catalyst, a variety of organic and inorganic metallic compounds may be used. Specific examples include organic titanium compounds such as tetrabutyl titanate, tetraisopropyl titanate, and tetraethyl titanate; organic tin compounds such as dibutyltin oxide, dibutyltin laurate, stannous octylate, and mono-n-butyltin fatty acid salts; and stannous halides such as stannous chloride, stannous bromide, and stannous iodide. Any of these catalyst is used in an amount of 0.1 ppm to 1,000 ppm based on the weight of the starting material, preferably 0.5 ppm to 500 ppm.

The polyester resin (B) used in the present invention has a number average molecular weight of 1,000 to 500,000, preferably 5,000 to 200,000, more preferably 10,000 to 100,000.

When the number average molecular weight is less than 1,000, bleeding prevention effect cannot be attained. On the other hand, when the molecular weight is in excess of 500,000, the polyester cannot be melt-kneaded with a variety of resins. The number average molecular weight employed herein is determined through gel permeation chromatography.

In the present invention, when the flame retardant composition is produced from the fluorine compound (A) and the polyester (B) through the aforementioned method (i.e., only melt-mixing), the ingredients may be kneaded by means of a kneader such as a single screw extruder, a twin screw extruder, a Banbury mixer, or a kneader mixer. No particular limitation is imposed on the order of blending the ingredients and mixing method for the ingredients.

The ratio of the fluorine compound (A) to the polyester resin (B) contained in the flame retardant composition may be determined appropriately in accordance with the type of the thermoplastic resin or thermosetting resin to be blended with the composition. Generally, the ratio by weight of (A)/(B) is (0.1 to 90)/(99.9 to 10), preferably (20 to 80)/(80 to 20). When the ratio is less than 0.1/99.9, the effect of the ingredient (A) cannot be attained. On the other hand, when the ratio is in excess of 90/10, the fluorine compound (A) may bleed out from a flame retardant resin composition obtained by blending the flame retardant composition with a thermoplastic resin or thermosetting resin or a molded article obtained by molding the resin composition. The above two cases are not preferred.

By adding the flame retardant composition of the present invention to a thermoplastic resin or thermosetting resin, the flame retardant resin composition and the molded product of the resin composition can be produced.

Specific examples of the thermoplastic resin include polyethylene resin, chlorinated polyethylene resin, polypropylene resin, polybutadiene resin, polymethylpentene resin, poly(butene-1) resin, polystyrene resin, impact-resistant polystyrene resin, poly((meth)acryl-styrene) resin, poly(phenylene ether) resin, poly(phenylene sulfide) resin, poly(phenylene oxide) resin, modified poly(phenylene oxide) resin, polyacrylonitrile resin, polyamide (nylon) resin, poly(ethylene terephthalate) resin, poly(butylene terephthalate) resin, polycarbonate resin, polyvinyl alcohol resin, polyvinyl acetal resin, polyacetal resin, polysulfone resin, polyester resin, hydroxybenzoic acid polyester resin, poly(vinyl chloride) resin, poly(vinyl bromide) resin, poly(vinyl fluoride) resin, poly(vinyl acetate) resin, poly(vinylidene chloride) resin, acrylonitrile-styrene (AS) resin, acrylonitrile-butadiene-styrene (ABS) resin, acrylonitrile-chlorinated polyethylene-styrene (ACS) resin, fluororesin, (meth)acrylic resins such as poly(methyl (meth)acrylate) resin, polycarbonate-ABS resin (resin alloy), vinyl chloride-styrene copolymer, vinyl chloride-ethylene copolymer, vinyl chloride-propylene copolymer, vinyl chloride-isobutylene copolymer, vinyl chloride-vinylidene chloride copolymer, vinyl chloride-chlorinated propylene copolymer, vinyl chloride-butadiene copolymer, vinyl chloride-isoprene copolymer, styrene-butadiene copolymer, acrylonitrile-butadiene copolymer, ethylene-vinyl acetate copolymer, ethylene-propylene copolymer, vinyl chloride-vinyl acetate copolymer, vinyl chloride-ethylene-vinyl acetate terpolymer, vinyl chloride-styrene-maleic anhydride terpolymer, vinyl chloride-styrene-acrylonitrile terpolymer, vinyl chloride-vinylidene chloride-vinyl acetate terpolymer, vinyl chloride-(meth)acrylic acid ester copolymer, vinyl chloride-maleic acid ester copolymer, vinyl chloride-acrylonitrile copolymer, and (meth)acrylic acid ester-butadiene-styrene copolymer.

Among the above-exemplified resins and polymers, polyethylene resin, chlorinated polyethylene resin, polypropylene resin, polybutadiene resin, polystyrene resin, impact-resistant polystyrene resin, poly(methyl methacrylate) resin, poly(phenylene oxide) resin, modified poly(phenylene oxide) resin, polyamide resin, polycarbonate resin, polyester resin, poly(vinyl chloride) resin, AS resin, ABS resin, and ACS resin are preferred, since dripping resistance can be envisaged.

Examples of the thermosetting resin include polyurethane resin, phenolic resin, melamine resin, urea resin, epoxy resin, silicone resin, diallyl phthalate resin, polyimide resin, and unsaturated polyester resin. Among the above-exemplified resins, polyurethane resin, phenolic resin, melamine resin, urea resin, epoxy resin, and unsaturated polyester resin are particularly preferred.

The flame retardant composition formed of the fluorine compound (A) and the polyester resin (B) and the thermoplastic resin or thermosetting resin can be melted and kneaded together by means of an apparatus such as a single screw extruder, a twin screw extruder, a Banbury mixer, or a kneader mixer. No particular limitation is imposed on the order of blending the ingredients and mixing method for the ingredients. Notably, the flame retardant resin composition of the present invention can also be produced by mixing three ingredients: the fluorine compound (A), the polyester resin (B), and the thermoplastic resin or thermosetting resin.

By virtue of the presence of the polyester resin (B), which is one characteristic feature of the present invention, the fluorine compound (A) can be uniformly micro-dispersed in resin.

The amount (flame retardancy effective amount) of the flame retardant composition added to the flame retardant resin composition of the present invention may be appropriately determined in accordance with the type of the resin used, use of the resin, and demanded performance of the resin.

The fluorine compound (A) serving as a flame retardant used in the present invention provides remarkable flame retardancy despite addition thereof in a small amount. The amount of the fluorine compound (A) in the flame retardant resin composition falls within a range of 0.001% by weight to 10% by weight, preferably 0.005% by weight to 5% by weight, more preferably within a range of 0.1% by weight to 1% by weight or thereabouts.

When the amount of the fluorine compound (A) in the flame retardant resin composition is less than 0.001% by weight, flame retardant effect cannot be attained. On the other hand, when the compound (A) is used in an amount more than 10% by weight, flame retardant effect commensurate with the addition cannot be attained, resulting in increase in cost and impairment of intrinsic characteristics of the resin. The two cases are not preferred.

The polyester resin (B) used in the present invention is contained in the flame retardant resin composition in an amount falling within a range of 0.1% by weight to 10% by weight, preferably within a range of 0.1% by weight to 1% by weight or thereabouts. When the amount of the polyester resin (B) in the flame retardant resin composition is less than 0.1% by weight, compatibility of the polyester resin with the fluorine compound (A) serving as a flame retardant may be adversely affected. On the other hand, when the polyester resin is used in an amount more than 10% by weight, intrinsic characteristics of the resin which differs from polyester and is incorporated into the resin composition are adversely affected. The two cases are not preferred.

The flame retardant composition or the flame retardant resin composition of the present invention may contain, in accordance with needs, an additional flame retardant and one or more additives such as an antioxidant, a filler, a stabilizer, a colorant, an antistatic agent, a lubricant, a nucleating agent, and an anti-blooming agent.

Examples of the flame retardant other than the compound (A) include halogen-free phosphate ester compounds, halogen-containing phosphate ester compounds, inorganic compounds, nitrogen-containing compounds, and ammonium phosphate salts.

Examples of halogen-containing phosphate ester compounds include tris(β-chloroethyl) phosphate, tris(2,3-dibromopropyl) phosphate, tris(tribromoneopentyl) phosphate, bis(chloroethyl)(tribromoneopentyl) phosphate, diethylene glycol bis(β-chloropropyl) phosphate, and diethylene glycol bis(β-chloroethyl) phosphate. There may also be employed halogen compounds such as tetrabromoethane and hexabromocyclodecane; phosphate ester compounds having a phosphorinane skeleton or a bicyclo skeleton such as phosphonate ester compounds (e.g., 2-ethylhexyl mono-2-ethylhexylphosphonate and 2-ethylhexyl di-2-ethylhexylphosphonate); organic phosphine oxide compounds; and halogenated organic phosphine oxide compounds.

Examples of the inorganic compounds include magnesium hydroxide, aluminum hydroxide, and antimony trioxide. Particularly when the resin is modified poly(phenylene oxide) resin, polystyrene resin, or ABS resin, the fluorine compound of the present invention is preferably used in combination with any of the aforementioned inorganic compounds.

Examples of the antioxidant include phosphorus compounds, hydroquinone compounds, phenol compounds, amine compounds, and sulfur compounds. Of these, hydroquinone compounds and phosphorus compounds are preferred. These antioxidants may be used singly or in combination of two or more species. Through addition of any of these antioxidants, a flame retardant resin composition having excellent heat resistance and fogging properties can be produced.

Specific examples of the hydroquinone compounds include hydroquinone, 2,5-di-tert-butylhydroquinone, 2,5-di-tert-amylhydroquinone, and octylhydroquinone. Of these, 2,5-di-tert-amylhydroquinone is particularly preferred from the viewpoint of enhancement of heat resistance of the flame retardant resin composition.

Specific examples of the phosphorus compounds include trivalent organic phosphorus compounds such as triphenyl phosphite, tris(nonylphenyl) phosphite, diphenyl(isodecyl) phosphite, bis(2,4-di-tert-butylphenyl)pentaerythritol diphosphite, and tetrakis(2,4-di-tert-butylphenyl)-4,4-diphenylene phosphonite.

Examples of the filler include silica, talc, graphite, carbon black, titanium oxide, and alumina.

The flame retardant resin composition of the present invention can be produced by adding a flame retardant composition containing the fluorine compound (A) and the polyester resin (B) to a monomer supplied for producing the resin at bulk polymerization (1); to a bulk polymerization mixture at a final reaction stage for producing the resin (2); or to the resin during kneading (3).

By molding the flame retardant resin composition through a known method, flame retardant molded articles of a desired shape such as plate, sheet, or film can be obtained. The thus-obtained molded articles have excellent flame retardancy, heat resistance, and electrical insulation property as well as excellent mechanical properties, and have favorable appearance.

Examples of the aforementioned molded articles obtained from the flame retardant resin composition of the present invention include household electric appliances such as refrigerator back covers, washing machine capacitor covers, television set back covers, television set speaker boxes, deflecting yokes in television sets, receptacles, sockets, sockets for Christmas lamps, CRT monitor bodies, blow outlet blades of air conditioner apparatuses, blow direction selectors, humidifier covers, microwave oven doors, toilet seats of a washing toilet seats "Washlet", tanks for hot water, motor covers and control panels for electric fans, connectors, PPC toner containers, and ventilating fan covers;
civil engineering and construction-related products such as troughs and rids, electric wire covers and pipes for underground utilities, pipe covers, mono-filaments and laminate film for flat yarn, chairs for stadium use and their back board covers, flower pots for foliage plants, members of floor adapted to office automation, and wall paper sheets;
automobile parts such as corrugated tubes and pipes for electric wire, floor mats, members of door trim, trunk room sheets and linings, battery casings, radiator cooling fans, fall-preventing panels for an engine room, instrument panels, members of interior trim, glove boxes, console boxes, fan shrouds, air cleaner housings, sheet frames, connectors, and ashtrays; and miscellaneous goods such as polypropylene bands, containers, and pallets.

### Examples

The present invention will next be described in detail by way of Examples and Comparative Example, which should not be construed as limiting the invention thereto.

### Example 1

Diethylene glycol (4.32 g), ε-caprolactone monomer (395.8 g), a mono-n-butyltin fatty acid salt (0.06 g), Epikote 828 (bisphenol A epoxy resin, product of Yuka Shell Epoxy (epoxy eq. 187, liquid form at 25°C)) (0.8 g) serving as a hydrolysis inhibitor, and potassium perfluorobutylsulfonate (product name: RM-65, product of Miteni) (400 g) were placed in a separable flask. Under nitrogen flow, the mixture was heated with gentle stirring to 170°C, and allowed to react at the temperature for six hours. Thereafter, the reaction mixture was removed. The mixture was found to assume a uniform waxy substance. Then, the mixture was added to polycarbonate resin (product name: Panlite L-1225Y, product of Teijin Chemicals Ltd.) such that the RM-65 content was controlled to 0.1 parts by weight based on 100 parts by weight of the polycarbonate resin. The resultant mixture was mixed by use of a tumbler, and molded by means of an injection molding apparatus, thereby producing two types of molded articles having dimensions: 12.5 mm (width) × 125 mm (length) × 3.2 mm (1/8 inch) or 2.5 mm (1/10 inch) (thickness). The molded article pieces were subjected to a flammability test on the basis of the UL94 standards. The flammability test results were evaluated on the basis of the presence or absence of ignition of test pieces. Furthermore, a part of molded articles were placed in an oven (at 40°C) for one month, and the surface was observed after the storage so as to check blooming.

### Example 2

As the polyester resin (B), polycaprolactone resin (product name: Placcel H1P (number average molecular weight: about 10,000), product of Daicel Chem. Ind. Ltd.) (200 g) was placed in a separable flask and heated to 130°C under nitrogen flow, thereby melting the resin. The aforementioned potassium perfluorobutylsulfonate (100 g), serving as the fluorine compound (A), was added to the molten resin. The mixture was heated to 170 and stirred for about one hour and 30 minutes, whereby a homogeneous solution was formed. In a manner similar to that employed in Example 1, the thus-produced solution was added to polycarbonate resin, molded articles were produced from the resin mixture, and a flammability test was performed.

### Example 3

The procedure of Example 2 was repeated, except that the aforementioned polycaprolactone resin was used in an amount of 200 g and the aforementioned potassium perfluorobutylsulfonate in an amount of 200 g, to thereby produce test specimens. The test was performed in a manner similar to that of Example 1.

### Comparative Example 1

The procedure of Example 1 was repeated, except that the aforementioned potassium perfluorobutylsulfonate (0.1 parts) was added to polycarbonate resin, to thereby produce test pieces and perform the flammability test.

Table 1 shows the flammability test results of Examples 1 to 3 and Comparative Example 1. In Table 1, fluorine compound (A) content and polyester resin (B) content (parts by weight) are on the basis of 100 parts by weight of the resin to which the flame retardant composition has been added.

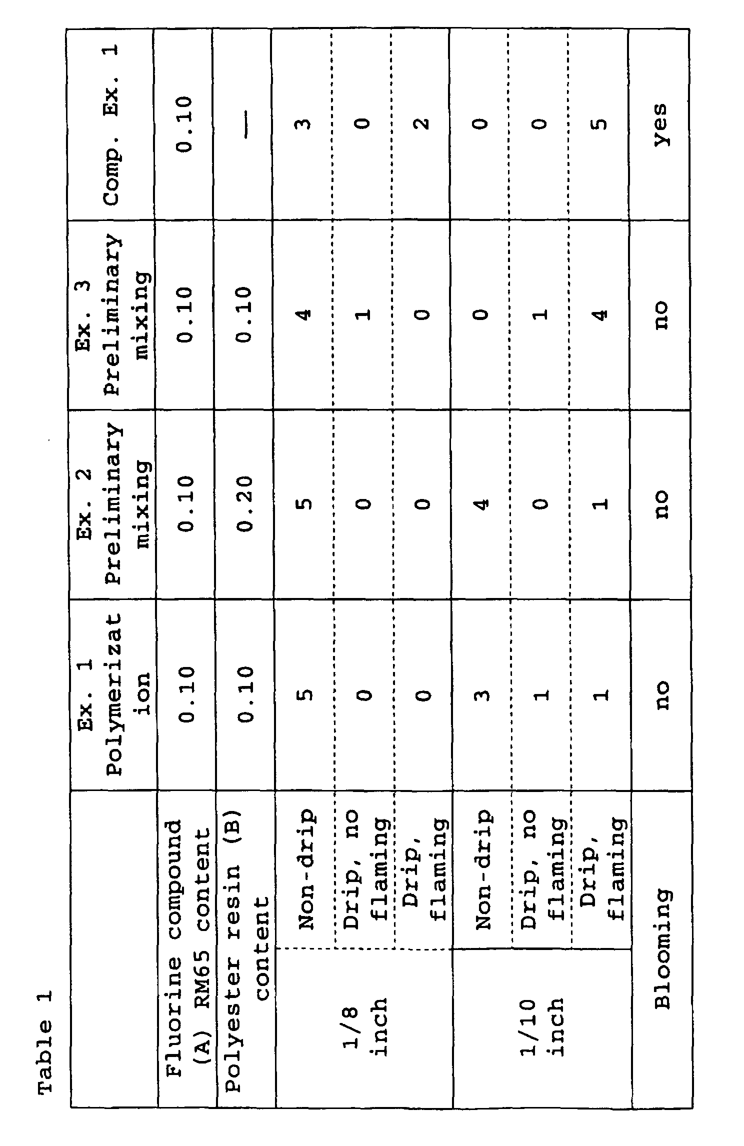

As is clear from Table 1, flame retardant resin compositions containing polycaprolactone resin (product name: Placcel H1P), a type of polyester resin (B), exhibit more excellent flame retardant characteristics as compared with the flame retardant resin composition of Comparative Example 1 employing only a conventional flame retardant. In addition, each polycarbonate resin composition to which the flame retardant composition of Example 1, 2, or 3 has been added causes no bleeding of the flame retardant for a long period of time. In contrast, slight blooming attributed to bleeding out was observed on the surface of molded articles of the polycarbonate composition of Comparative Example 1, after one month storage at 40°C of the molded articles.

### Industrial Applicability

According to the present invention, there can be provided a flame retardant composition which can provide flame retardant effect through addition of the composition in a very small amount, exhibits good dispersibility, and provides molded articles containing a flame retardant not causing bleeding. A flame retardant resin composition containing the flame retardant composition can also be provided.

## Claims

1. A flame retardant composition, **characterized in that** the composition comprises, as essential ingredients, a fluorine compound (A) represented by the following formula (1) :
R¹-SO₂-R² or R¹-SO₃⁻M⁺ (1)
(wherein R¹ represents a C₁-C₁₂ perfluoroalkyl group, a C₂-C₈ perfluoroalkenyl group, a C₆-C₁₂ perfluoroaryl group which may be substituted, a C₃-C₁₂ perfluoroalicyclic hydrocarbon group, or a C₇-C₁₂ perfluoroaralkyl group; R² represents a halogen atom, an N-alkylamino group, or an N-alkyl-N-hydroxyalkylamino group; and M represents an alkali metal) and a polyester resin (B).

2. A flame retardant composition as claimed in claim 1, wherein the composition contains the fluorine compound (A) in an amount of 0.1 parts by weight to 90 parts by weight and the polyester resin (B) in an amount of 10 parts to 99.9 parts by weight, the total amount of (A) and (B) being 100 parts by weight.

3. A flame retardant composition as claimed in claim 1 or 2, wherein the fluorine compound (A) is at least one species selected from among potassium perfluorobutylsulfonate, potassium perfluorooctylsulfonate, lithium perfluorooctylsulfonate, potassium perfluoro-4-ethylcyclohexylsulfonate, perfluorobutanesulfonyl fluoride, perfluorohexanesulfonyl fluoride, perfluorooctanesulfonyl fluoride, N-ethylperfluorooctanesulfonamide, and N-ethyl-N-hydroxyethylperfluorooctanesulfonamide.

4. A flame retardant composition as claimed in any one of claims 1 to 3, wherein the polyester resin (B) is a lactone polymer.

5. A flame retardant composition as claimed in claim 4, wherein the lactone polymer is obtained from at least one species of ε-caprolactone, trimethyl-ε-caprolactone, monomethyl-ε-caprolactone, γ-butyrolactone, and δ-valerolactone through ring-opening polymerization in the presence of a compound having at least one active hydrogen atom.

6. A process for producing a flame retardant composition, **characterized in that** the process comprises polymerizing a lactone monomer in the presence of a fluorine compound (A) represented by the following formula (1):
R¹-SO₂-R² or R¹-SO₃⁻M⁺ (1)
(wherein R¹ represents a C₁-C₁₂ perfluoroalkyl group, a C₂-C₈ perfluoroalkenyl group, a C₆-C₁₂ perfluoroaryl group which may be substituted, a C₃-C₁₂ perfluoroalicyclic hydrocarbon group, or a C₇-C₁₂ perfluoroaralkyl group; R² represents a halogen atom, an N-alkylamino group, or an N-alkyl-N-hydroxyalkylamino group; and M represents an alkali metal).

7. A flame retardant resin composition comprising a flame retardant composition as claimed in any one of claims 1 to 5 and a thermoplastic resin or thermosetting resin.

8. A flame retardant resin composition as claimed in claim 7, wherein the resin composition contains the fluorine compound (A) in an amount of 1% by weight or less.

9. A flame retardant resin composition as claimed in claim 7, wherein the resin composition contains the polyester resin (B) in an amount of 1% by weight or less.

10. A molded article produced by molding a flame retardant resin composition as claimed in any one of claims 7 to 9.
